# EUROPÄISCHE PATENTANMELDUNG

(11) **EP 2 328 358 A2**
(43) Veröffentlichungstag der Anmeldung: **01.06.2011**
(21) Anmeldenummer: 10193107.9
(22) Anmeldetag: 30.11.2010
(51) Int. Cl.: H04R 1/10, H02G 11/02, H04M 1/15

(54) **Kabelaufwickelvorrichtung für ein Ohrhörerkabel**

(30) Priorität: 30.11.2009 DE 202009016258 U
(71) Anmelder: Bont, Harald, 65119 Hofheim / Taunus (DE)
(72) Erfinder: Bont, Harald, 65119 Hofheim / Taunus (DE)
(74) Vertreter: Farago, Peter Andreas

(57) **Zusammenfassung**

Die vorliegende Erfindung betrifft ein Kabelaufwickelvorrichtung (1) für ein Ohrhörerkabel (11), umfassend ein erstes starres Gehäuseteil (3), eine mit dem ersten starren Gehäuseteil (3) verbundene Kabeltrommel (31) zur Aufnahme des Ohrhörerkabels (11), und ein zweites Gehäuseteil (2), das mit der Kabeltrommel (31) verbunden ist und das aus einem flexiblen Material besteht, so dass das zweite Gehäuseteil (2) aus einer ersten Position, in der das zweite Gehäuseteil (2) die Kabeltrommel (11) überdeckt und im Wesentlichen an einem äußeren Rand (35) des ersten starren Gehäuseteils (3) anliegt, in eine zweite Position betätigt werden kann, in der ein äußerer Rand (28) des zweiten Gehäuseteils (2) vom äußeren Rand (35) des ersten starren Gehäuseteils (3) absteht und die Kabeltrommel (31) freilegt, wobei das Ohrhörerkabel (11) auf- bzw. abgewickelt werden kann, wobei das zweite Gehäuseteil (2) mit von seinem Außenrand abgesetzten ringförmigen Ausbuchtungen (24) und ringförmigen Einbuchtungen (26) ausgebildet ist, und wobei das zweite Gehäuseteil (2) in der ersten Position einen Innenraum (39) des ersten starren Gehäuseteils (3) schützend abschließt, so dass ein im Innenraum (39) des ersten Gehäuseteils (3) und/oder in einem Innenraum (29) des zweiten Gehäuseteils (2) enthaltenes, aufgewickeltes Ohrhörerkabel (11) und daran sich befindliche Endgeräte geschützt aufbewahrt werden können.

## Beschreibung

Die vorliegende Erfindung betrifft eine Kabelaufwickelvorrichtung für ein Ohrhörerkabel, insbesondere eine Kabelaufwickelvorrichtung für ein Stereo-Ohrhörerkabel-Set, bestehend aus einer Kabeltrommel mit fester Unterschale und einer flexiblen Oberschale, die zum Ab- bzw. Aufwickeln der Stereokabel und zum Einlegen der Ohrhörer in die Kabelaufwickelvorrichtung leicht aufgeklappt bzw. wieder zugeklappt werden kann. Auf diese Weise lässt sich ein Stereo-Ohrhörerkabel-Set, bestehend aus einem Verbindungsstecker, beispielsweise einem Klinkenstecker, einem Stereokabel, und zwei Ohrhörern, entweder für Reisezwecke in der erfindungsgemäßen Kabelaufwickelvorrichtung ganz aufwickeln und verstauen oder bei Benutzung in einem gewünschten Maß abwickeln.

### Stand der Technik:

Aus der DE 37 08 353 C1, GB 2 399 072 A, GB 2 261 869 A, DE 203 11 457 U1 sind Kabelaufwickelvorrichtungen bekannt, die mit einem automatischen Aufrollmechanismus versehen sind, der mechanisch aufwendig und daher relativ teuer ist, ohne dass solche Vorrichtungen im eingezogenen bzw. aufgewickelten Zustand Schutz für die Ohrhörer geben. Darüber hinaus sind auch einfache manuelle Kabelaufwickelvorrichtungen bekannt, die entweder keinen Schutz für die Ohrhörer bieten, wie Z. B. die Kabelaufwickelvorrichtung aus der DE 198 47 143 A1, oder sie sind relativ schwer und umständlich zu bedienen.

Die meisten Kabelaufroll- oder Kabelaufwickelvorrichtungen bieten für den Verbindungsstecker und für die Ohrhörer im Zustand eingezogener bzw. aufgewickelter Kabel überhaupt keinen Schutz, so dass der Verbindungsstecker und die Ohrhörer solcher Kabelaufroll- oder Kabelaufwickelvorrichtungen beim Transport in einer Tasche verschmutzt und deren Kabelansätze ständig bewegt und somit ständig mechanisch beansprucht werden.

Eine auf dem Markt sich befindliche Kabelaufwickelvorrichtung der Firma Sony mit der Bezeichnung MDR-E829V nimmt zwar nach dem Öffnen eines Deckels die Ohrhörer in einem inneren, dafür vorgesehenen Raum nach dem Einlegen der Ohrhörer auf und lässt nach dem Schließen des Deckels das Kabel sogar in einfacher Weise durch ein außen zugängliches Drehrad aufrollen, jedoch ist die Kabelaufwickelvorrichtung relativ groß, schwer und nicht mit dem Stereo-Ohrhörerkabel-Set verbunden, so dass die Kabelaufwickelvorrichtung jedes Mal gesucht und von neuem angebunden werden muss.

Die bekannten Kabelaufwickelvorrichtungen sind entweder, wenn sie als dauernd verbunden mit dem Stereo-Ohrhörerkabel-Set ausgeführt sind, relativ schwer und umständlich zu bedienen, oder sie weisen keinen Schutzraum für ein Verstauen der Ohrhörer für Transportzwecke auf. Auch sollte das Kabelende mit dem Verbindungsstecker möglichst in der Länge variiert werden können, um einen praktischen, für die Anwendung bequemen Gebrauch zu ermöglichen.

Daher besteht eine Aufgabe der Erfindung in der Bereitstellung einer Vorrichtung zum Auf- und Abwickeln eines Kabels, insbesondere einer kostengünstigen Kabelaufwickelvorrichtung, die die Nachteile aus dem Stand der Technik beseitigt und ein einfaches Auf- bzw. Abwickeln eines Kabels, insbesondere eines Stereo-Ohrhörerkabels und eine schützende Aufnahme der Ohrhörer durch die Vorrichtung ermöglicht.

### Offenbarung der Erfindung

Die vorstehenden Aufgaben sowie weitere der Beschreibung zu entnehmende Aufgaben werden von einer Vorrichtung zum Auf- und Abwickeln eines Kabels gemäß Anspruch 1 gelöst. Weitere vorteilhafte Ausbildungen der Erfindung sind in den abhängigen Ansprüchen angegeben.

Erfindungsgemäß wird eine Kabelaufwickelvorrichtung und insbesondere eine Kabelaufwickelvorrichtung für Stereo-Ohrhörerkabel-Set zur Verfügung gestellt, die mit einem Stereo-Ohrhörerkabel-Set auf einfache Weise mechanisch verbunden werden kann, mit der in einem aufgeklappten Zustand ein darin enthaltenes Stereo-Ohrhörerkabel beliebig bis zu einer gewünschten Kabellänge auf- oder abgewickelt werden kann und mit der ein Verbindungsstecker und Ohrhörer schützend hineingelegt bzw. wieder herausgenommen werden können. In abgewickeltem Zustand kann die Kabelaufwickelvorrichtung auch entlang des Kabels hin- und hergeschoben werden, so dass sie der Anwender an eine für ihn angenehme Position schieben kann.

Für Transportzwecke können in der Kabelaufwickelvorrichtung das Stereo-Ohrhörerkabel aufgewickelt und die Ohrhörer und der Verbindungsstecker in einem Innenraum der Kabelaufwickelvorrichtung untergebracht werden, so dass sich das Stereo-Ohrhörerkabel-Set bei einem Transport nicht verheddert und der Verbindungsstecker und die Ohrhörer mechanisch geschützt sind.

### Kurzbeschreibung der Zeichnungen

Fig. 1A zeigt eine Kabelaufwickelvorrichtung gemäß einer Ausführungsform der Erfindung mit Stereo-Ohrhörerkabel-Set und dabei ganz abgewickeltem Kabel;
Fig. 1B zeigt die Kabelaufwickelvorrichtung mit Stereo-Ohrhörerkabel-Set der Fig. 1A mit einem ein wenig aufgewickelten Kabel;
Fig. 1C zeigt die Kabelaufwickelvorrichtung mit Stereo-Ohrhörerkabel-Set der Fig. 1A mit völlig aufgewickeltem Kabel, wobei Ohrhörer und Verbindungsstecker in der Kabelaufwickelvorrichtung hineingelegt sind;
Fig. 2A zeigt die Kabelaufwickelvorrichtung der Fig. 1A in Seitenansicht bei geschlossenem Deckel, mit Stereo-Ohrhörerkabel-Set und dabei ein wenig aufgewickeltem Kabel;
Fig. 2B zeigt die Kabelaufwickelvorrichtung der Fig. 1A bzw. Fig. 2A in Seitenansicht bei geöffnetem Deckel, mit Stereo-Ohrhörerkabel-Set und dabei ein wenig aufgewickeltem Kabel;
Fig. 3 zeigt die Kabelaufwickelvorrichtung der Fig. 1A in der Ansicht von oben, wobei ein zweites Gehäuseteil (Deckel) zu sehen ist;
Fig. 4 zeigt die Kabelaufwickelvorrichtung der Fig. 1A in der Ansicht von oben, wobei ein erstes Gehäuseteil (Boden) zu sehen ist;
Fig. 5 zeigt die Kabelaufwickelvorrichtung der Fig. 1A mit dem ersten und dem zweiten Gehäuseteil, in Seitenansicht, aufgeschnitten und in Explosionsdarstellung;
Fig. 6 zeigt die Kabelaufwickelvorrichtung der Fig. 5 mit dem ersten und dem zweiten Gehäuseteil in Seitenansicht, aufgeschnitten und mit aufgewickeltem Kabel und mit darin untergebrachtem Verbindungsstecker und Ohrhörern.

### Detaillierte Beschreibung eines Ausführungsbeispiels

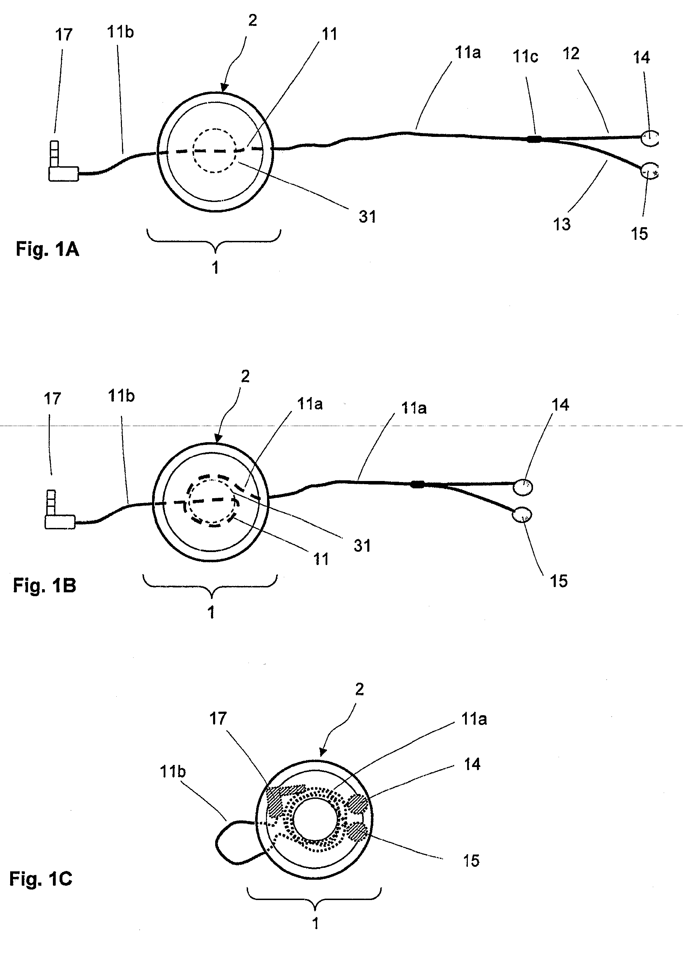

In den Fig. 1A-1C ist ein Ausführungsbeispiel einer erfindungsgemäßen Kabelaufwickelvorrichtung in verschiedenen Kabelaufwickelzuständen dargestellt.

Fig. 1A zeigt in Draufsicht eine Kabelaufwickelvorrichtung 1, insbesondere eine Kabelaufwickelvorrichtung 1 in der Anwendung für ein Stereo-Ohrhörerkabel-Set, die um ein Ohrhörerkabel bzw. ein Stereokabel 11 zwischen Ohrhörern 14, 15 einerseits und einem Verbindungsstecker 17 andererseits angeordnet ist, wobei der Verbindungsstecker 17 über die Kabelverbindung, umfassend das Stereokabel 11, mit den Ohrhörern 14, 15 elektrisch verbunden ist. Die Ohrhörer 14 und 15 sind jeweils über ein Monokabel 12 und 13 über ein Kabelverbindungselement 11c mit einem ersten Teil 11a des Stereokabels 11 verbunden, das an seinem anderen Ende in das eine Ende eines in der Kabelaufwickelvorrichtung 1 befindlichen Mittelteils des Stereokabels 11 übergeht, das wiederum an seinem anderen Ende in einen zweiten Teil 11b des Stereokabels 11 übergeht, das wiederum an seinem anderen Ende mit dem Verbindungsstecker 17 verbunden ist. Insbesondere kann das Stereokabel 11 als ursprünglich ein einziges Stereokabel angesehen werden, das nur zur besseren Unterscheidung der beiden aus der Kabelaufwickelvorrichtung 1 in abgewickeltem Zustand herausstehenden Enden des Stereokabels 11 in die verschiedenen Kabelteile aufgeteilt wurde. Das Stereokabel 11 wird ausgehend von den Ohrhörern 14, 15 bis zu einer gewünschten Länge durch die Kabelaufwickelvorrichtung 1 hindurchgeführt und teilt sich so in den ersten Teil 11a des Stereokabels 11, das zu den Ohrhörern 14, 15 hinzeigt, in den in Fig. 1A strichliert gezeichneten Mittelteil des Stereokabels 11, das ohne aufgewickelt zu sein, geradlinig durch die Kabelaufwickelvorrichtung 1 hindurchgeführt ist und sich demgemäß in der Kabelaufwickelvorrichtung 1 befindet und in den zweiten Teil 11b des Stereokabels 11, das zum Verbindungsstecker 17 hinzeigt und mit diesem verbunden ist. Die Kabelaufwickelvorrichtung 1 ist auch erfindungsgemäß so gestaltet, dass die meisten kommerziell verfügbaren Stereo-Ohrhörerkabel-Sets durch die Kabelaufwickelvorrichtung 1 gezogen und mit dieser verbunden werden können.

Fig. 1B zeigt die gleiche Anordnung der Kabelaufwickelvorrichtung 1, wie in Fig. 1A dargestellt, jedoch in einem Zustand, in dem der erste Teil 11a des Stereokabels 11 mit einer Windung um eine innere, verdeckte, strichliert gezeichnete Kabeltrommel 31 gewickelt ist.

Fig. 1C zeigt die gleiche Anordnung der Kabelaufwickelvorrichtung 1, wie in Fig. 1A und Fig. 1B dargestellt, jedoch in einem Zustand, in dem sowohl der nunmehr strichliert gezeichnete erste Teil 11a des Stereokabels 11 mit seinen fortgesetzten Monokabeln 12, 13 vollständig um die innere Kabeltrommel 31 gewickelt ist. Die nunmehr strichliert gezeichneten Ohrhörer 14, 15 und ebenso der Verbindungsstecker 17 sind in den Innenraum der Kabelaufwickelvorrichtung 1 hineingelegt und schützend untergebracht. Ein Abschnitt des zweiten Teils 11b des Stereokabels 11 steht noch aus der Kabelaufwickelvorrichtung 1 heraus, hätte aber auch vollkommen mit aufgewickelt sein können.

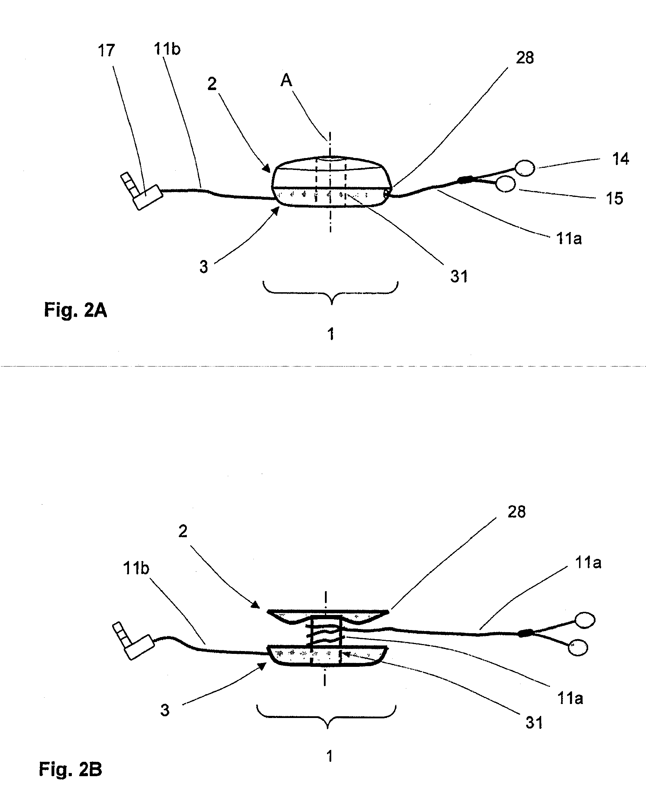

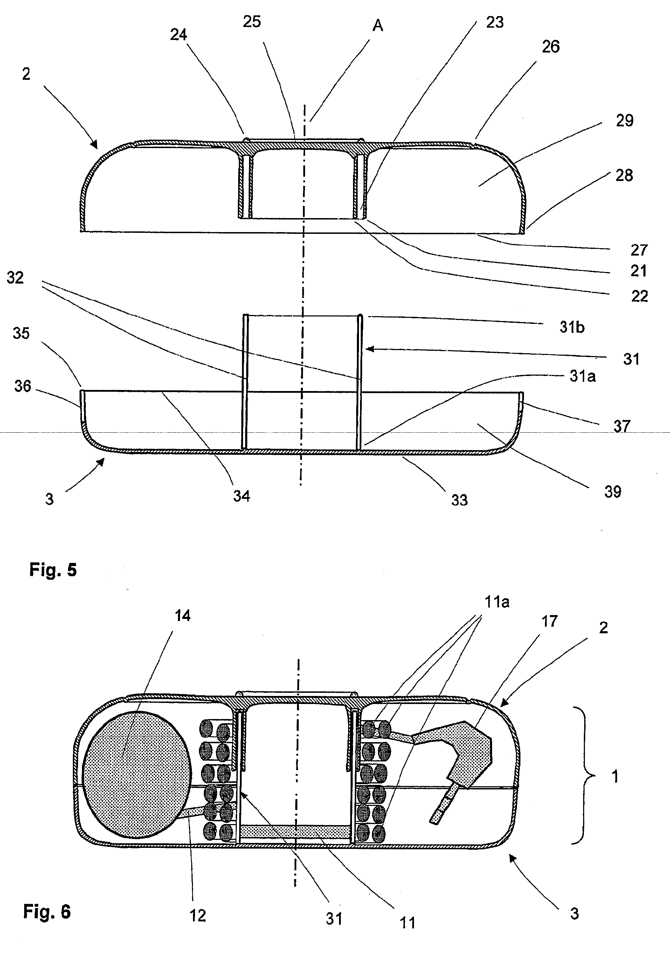

Fig. 2A zeigt die gleiche Anordnung der Kabelaufwickelvorrichtung 1 mit Stereo-Ohrhörerkabel-Set, wie in Fig. 1B dargestellt, jedoch in einer Seitenansicht und zeigt somit das Profil von der Seite der ansonsten runden, um eine Symmetrieachse A konzentrischen Kabelaufwickelvorrichtung 1. Die Kabelaufwickelvorrichtung 1 besteht aus einem unteren, um die Symmetrieachse A konzentrischen ersten Gehäuseteil 3 und einem damit verbundenem, oberen, um die Symmetrieachse A konzentrischen zweiten Gehäuseteil 2. Die beiden Gehäuseteile 3 und 2 bilden in zusammenmontiertem Zustand einen Innenraum, der sich einesteils aus einem Innenraum 39 des ersten Gehäuseteils 3 (siehe Fig. 5) und anderenteils aus einem Innenraum 29 des zweiten Gehäuseteils 2 zusammensetzt. Insbesondere bestehen das erste Gehäuseteil 3 aus einem eher festen Kunststoff und erfindungsgemäß das zweite Gehäuseteil 2 aus einem flexiblen Kunststoff, vorzugsweise einem leichten, flexiblen, silikongummiartigen Kunststoff, so dass der obere zweite Gehäuseteil 2, der den Innenraum 39 des unteren ersten Gehäuseteils 3 abdeckt, entlang der Symmetrieachse A nach außen hin geklappt werden kann (Fig. 2B). Dabei wird die innere, zylindrische Kabeltrommel 31 nach außen hin sichtbar, und es lässt sich somit der erste Teil 11a und der zweite Teil 11b um diese Kabeltrommel 31 weiter auf- oder abwickeln, bis sich eine gewünschte Länge der über die Kabelaufwickelvorrichtung 1 hinausstehenden Kabelenden des ersten bzw. zweiten Teils 11a, 11b einstellt; dann wird der zweite Gehäuseteil 2 wieder in die Ausgangslage in Richtung des ersten Gehäuseteils 3 geklappt und deckt diesen so ab, dass die herausragenden Abschnitte der Teile 11a und 11b zwischen einem äußeren Rand 35 des ersten Gehäuseteils 3 und einem äußeren Rand 28 des zweiten Gehäuseteils 2 eingeklemmt werden. Erfindungsgemäß lassen sich also die Teile 11a und 11b des Stereokabels mehr oder weniger auf- bzw. abwickeln, wenn das flexible, silikongummiartige zweite Gehäuseteil 2 nach außen hin geklappt ist, andernfalls werden die Stereokabel in ihrer Position fixiert.

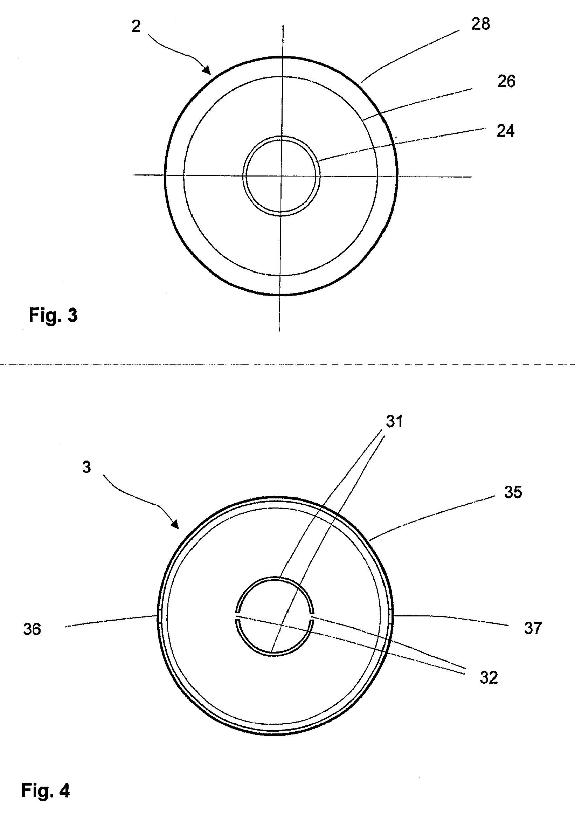

Um die Fixierung der Teile 11a und 11b des Stereokabels 11 in zugeklapptem Zustand des zweiten Gehäuseteils 2 noch zu verbessern und dabei auch einen mittigen Ein- und Austritt der Teile 11a und 11b des Stereokabels 11 aus der Kabelaufwickelvorrichtung 1 definiert einzuhalten, sind im äußeren Rand 35 des ersten Gehäuseteils 3 schlitzartige erste und zweite Aussparungen 36 und 37 (Fig. 4 und Fig. 5) vorgesehen, in die die Teile 11a und 11b des Stereokabels 11 eingelegt werden können. Vorzugsweise wird das Stereokabel 11 in den ersten Gehäuseteil 3 zunächst so eingelegt, dass der zweite Teil 11b des Stereokabels 11 in der gewünschten Position in die erste schlitzartige Aussparung 36 und der weiter verlaufende Mittelteil des Stereokabels 11 in die weiteren schlitzartigen Aussparungen 32 der Kabeltrommel 31 gedrückt werden. Das weiter verlaufende Mittelteil des Stereokabels 11 und schließlich der erste Teil 11a wird dann in vollkommen abgewickeltem Zustand durch die zweite schlitzartige Aussparung 37 aus der Kabelaufwickelvorrichtung 1 herausgeführt und der flexible zweite Gehäuseteil 2 auf den ersten Gehäuseteil 3 in einer Art Presspassung aufgepresst. Die zweite schlitzartige Aussparung 37 ist in Bezug auf die erste schlitzartige Aussparung 36 etwas weiter, um das Einlegen des Stereokabels 11 zu erleichtern. Die schlitzartigen Aussparungen 36 und 32 sind von der Größe her idealerweise so gestaltet, dass ein Teil des Stereokabels 11 (vorzugsweise der Mittelteil des Stereokabels 11) mit leichter Kraft hineingeschoben werden kann und darin festklemmt. Die schlitzartige erste Aussparung 36 kann so ausgestaltet sein, dass der Schlitz bis zu einem Boden 33 des ersten Gehäuseteils 3 ragen kann, die weiteren schlitzartigen Aussparungen 32 der Kabeltrommel 31 können ebenso bis zu einem unteren Rand 31a des ersten Gehäuseteils 3 verlaufen. Insbesondere ist auch denkbar, dass eine äußere und/oder innere Zylinderwand 21, 22 des flexiblen zweiten Gehäuseteils 2, die bei der Montage über die Kabeltrommel 31 geschoben werden, so lang gestaltet sind, dass sie am eingelegten Stereokabel 11 anstoßen, und so das Stereokabel 11 gegen das erste Gehäuseteil 3 festklemmen. Die Zylinderwände 21, 22 bestimmen dazwischen einen zylindrischer Hohlraum 23, der so bemessen ist, dass die zylindrische Kabeltrommel 31 hineingepresst werden kann. Es ist aber auch denkbar, dass eine der Zylinderwände 21 oder 22 teilweise oder ganz entfällt.

Fig. 5 zeigt das erste Gehäuseteil 3 und das zweite Gehäuseteil 2 in einer Seitenansicht aufgeschnitten und als um die Achse A rotationssymmetrische Gehäuseteile 2 und 3 . Das erste Gehäuseteil 3 ist rotationssymmetrisch um die Achse A und wannenförmig ausgestaltet mit der inneren zylindrischen Kabeltrommel 31 mit den weiteren schlitzartigen Aussparungen 32, durch die dann das Stereokabel 11 hindurchgeführt werden kann. Ein oberer Rand 31b der Kabeltrommel 31 ist eben so hoch gestaltet, dass in montiertem Zustand ein unterer Rand 27 des zweiten Gehäuseteils 2 auf dem oberen Rand 34 des ersten Gehäuseteils 3 idealerweise aufliegen kann. Beide Gehäuseteile 2 und 3 sind vorzugsweise so leicht wie möglich zu gestalten, und es ist eine entsprechende Materialauswahl dafür zu treffen. Vorzugsweise ist der flexible, silikongummiartige zweite Gehäuseteil 2 geometrisch so zu gestalten, dass seine Festigkeit der Anwendung eines mobilen, umgehängten Geräts gerecht wird und dem Anwender eine gewisse Solidität vermittelt, andererseits muss sich der äußere Rand 28 des zweiten Gehäuseteils 2 und damit der gesamte damit verbundene Bereich leicht nach außen und wieder nach innen zurück klappen lassen. Dafür können vorteilhaft verschiedene und mehrere ringförmige Ausbuchtungen 24 oder ringförmige Einbuchtungen 26 vorgesehen werden, die ein besseres Nachaußen- und Nachinnenklappen und ein ausgewogenes Verhältnis zwischen Festigkeit in geschlossenem Zustand und Dauerbelastbarkeit des zweiten Gehäuseteils 2 erzeugen.

Denkbar ist auch, die Geometrie des zweiten Gehäuseteils 2 so zu gestalten, dass durch einen Fingerdruck auf einen Mittelteil 25 des flexiblen zweiten Gehäuseteils 2 dessen äußerer Rand 28 nach außen, vom äußeren Rand des ersten Gehäuseteils entgegen gerichtet abgehoben wird, so dass von Hand leicht unter diesen äußeren Rand 28 des zweiten Gehäuseteils gegriffen werden kann, um diesen leicht nach außen (oben) hochzuziehen zu können. Auch ist in diesem Zusammenhang bei entsprechender Geometrie der Gehäuseteile 2 und 3 denkbar, dass sich durch Fingerdruck auf den Mittelteil 25 des flexiblen zweiten Gehäuseteils 2 dessen äußerer Rand 28 ganz nach außen vom äußeren Rand des ersten Gehäuseteils entgegengerichtet abhebt und umklappt, ohne dass der äußere Rand 28 des zweiten Gehäuseteils 2 von Hand weiter hochgezogen werden muss.

Der entstehende Innenraum der Kabelaufwickelvorrichtung 1 setzt sich aus den Innenräumen 39 und 29 der Gehäuseteile 3 und 2 zusammen und ist so bemessen, dass die aufgewickelten Teile 11a und 11b des Stereokabel 11, die Monokabel 12, 13, die Ohrhörer 14, 15 und idealerweise auch der Verbindungsstecker 17 darin Platz finden können (Fig. 6).

Darüber hinaus ist es erfindungsgemäß auch denkbar, dass die Kabelaufwickelvorrichtung 1 und damit ein erstes und ein zweites Gehäuseteil 3 und 2, wie in Fig. 5 gezeigt, nicht achsensymmetrisch und konzentrisch rund aufgebaut sind, sondern sie können auch eine beliebige Form aufweisen, solange mindestens eines der Gehäuseteile flexibel nach außen und dann wieder zurück nach innen geklappt werden kann. Gleichfalls muss die Kabeltrommel 31 nicht zwangsläufig integral mit dem ersten Gehäuseteil 3 sein, sondern kann als separates Teil mit dem ersten 3 und/oder dem zweiten Gehäuseteil 2 verbunden sein

Letztendlich ist es erfindungsgemäss auch denkbar, dass das Stereo-Ohrhörerkabel-Set einen Lautstärkeregler enthalten kann, der auch in der Kabelaufwickelvorrichtung 1 mit untergebracht werden kann.

### Bezuaszeichenliste

- 1 :: Kabelaufwickelvorrichtung
- 2 :: zweites Gehäuseteil
- 3 :: erstes Gehäuseteil
- 11 :: Ohrhörerkabel bzw. Stereokabel
- 11a :: erster Teil des Stereokabels 11
- 11b :: zweiter Teil des Stereokabels 11
- 11c :: Kabelverbindungselement
- 12 :: Monokabel
- 13 :: Monokabel
- 14 :: Ohrhörer
- 15 :: Ohrhörer
- 17 :: Verbindungsstecker, insbesondere Klinkenstecker
- 21 :: äußere Zylinderwand
- 22 :: innere Zylinderwand
- 23 :: zylindrischer Hohlraum
- 24 :: ringförmige Ausbuchtung
- 25 :: Mittelteil des zweiten Gehäuseteils 2
- 26 :: ringförmige Einbuchtung
- 27 :: unterer Rand des zweiten Gehäuseteils 2
- 28 :: äußerer Rand des zweiten Gehäuseteils 2
- 29 :: Innenraum des zweiten Gehäuses 2
- 31 :: Kabeltrommel
- 31a :: unterer Rand der Kabeltrommel 31
- 31b :: oberer Rand der Kabeltrommel 31
- 32 :: weitere schlitzartige Aussparungen
- 33 :: Boden des ersten Gehäuseteils 3
- 34 :: oberer Rand des ersten Gehäuseteils 3
- 35 :: äußerer Rand des ersten Gehäuseteils 3
- 36 :: erste Aussparung
- 37 :: zweite Aussparung
- 39 :: Innenraum des ersten Gehäuses 3
- A :: Symmetrieachse

## Patentansprüche

1. Kabelaufwickelvorrichtung (1) für ein Ohrhörerkabel (11), umfassend ein erstes starres Gehäuseteil (3), eine mit dem ersten starren Gehäuseteil (3) verbundene Kabeltrommel (31) zur Aufnahme des Ohrhörerkabels (11), und ein zweites Gehäuseteil (2), das mit der Kabeltrommel (31) verbunden ist und das aus einem flexiblen Material besteht, so dass das zweite Gehäuseteil (2) aus einer ersten Position, in der das zweite Gehäuseteil (2) die Kabeltrommel (11) überdeckt und im Wesentlichen an einem äußeren Rand (35) des ersten starren Gehäuseteils (3) anliegt, in eine zweite Position betätigt werden kann, in der ein äußerer Rand (28) des zweiten Gehäuseteils (2) vom äußeren Rand (35) des ersten starren Gehäuseteils (3) absteht und die Kabeltrommel (31) freilegt, wobei das Ohrhörerkabel (11) auf- bzw. abgewickelt werden kann, **dadurch gekennzeichnet, dass**
das zweite Gehäuseteil (2) mit von seinem Außenrand abgesetzten ringförmigen Ausbuchtungen (24) und ringförmigen Einbuchtungen (26) ausgebildet ist, und dass
das zweite Gehäuseteil (2) in der ersten Position einen Innenraum (39) des ersten starren Gehäuseteils (3) schützend abschließt, so dass ein im Innenraum (39) des ersten Gehäuseteils (3) und/oder in einem Innenraum (29) des zweiten Gehäuseteils (2) enthaltenes, aufgewickeltes Ohrhörerkabel (11) und daran sich befindliche Endgeräte geschützt aufbewahrt werden können.

2. Kabelaufwickelvorrichtung (1) gemäß Anspruch 1, wobei das erste starre Gehäuseteil (3) integral mit der Kabeltrommel (31) ausgebildet ist.

3. Kabelaufwickelvorrichtung (1) gemäß Anspruch 1 oder 2, wobei das Ohrhörerkabel (11) als Stereo-Kabel ausgebildet ist und ein Teil eines Stereo-Ohrhörerkabel-Set ist.

4. Kabelaufwickelvorrichtung (1) gemäß einem oder mehreren der vorstehenden Ansprüche, wobei das zweite Gehäuseteil (2) aus einem flexiblen, Silikon-gummiartigen Material derart besteht, dass das zweite Gehäuseteil (2) durch seine Materialspannung in der ersten bzw. zweiten Position verharrt.

5. Kabelaufwickelvorrichtung (1) gemäß einem oder mehreren der vorstehenden Ansprüche, wobei das zweite Gehäuseteil (2) aus der ersten Position in die zweite Position bzw. aus der zweiten Position in die erste Position manuell betätigt werden kann.

6. Kabelaufwickelvorrichtung (1) gemäß einem oder mehreren der vorstehenden Ansprüche, wobei die Kabeltrommel (31) zwei äußere, ringscheibenförmige Kabelaufwickelbegrenzungen aufweist, die einerseits durch das erste starre Gehäuseteil (3) selbst, andererseits durch das flexible zweite Gehäuseteil (2) dargestellt werden.

7. Kabelaufwickelvorrichtung (1) gemäß einem oder mehreren der vorstehenden Ansprüche, wobei die Endgeräte Ohrhörer (14, 15) und/oder einen Verbindungsstecker (17) umfassen.

8. Kabelaufwickelvorrichtung (1) gemäß einem oder mehreren der vorstehenden Ansprüche, wobei das erste starre Gehäuseteil (3) und das zweite Gehäuseteil (2) rotationssymmetrisch und/oder konzentrisch ausgebildet sind.

9. Kabelaufwickelvorrichtung (1) gemäß einem oder mehreren der vorstehenden Ansprüche, wobei die Kabeltrommel (31) zylindrisch ausgebildet ist und mit schlitzartigen Aussparungen (32) zur Durchführung eines Mittelteils des Ohrhörerkabels (11) ausgebildet ist.
